# EUROPEAN PATENT SPECIFICATION

(11) **EP 2 223 629 B1**
(45) Date of publication and mention of the grant of the patent: **18.03.2015**
(21) Application number: 09153948.6
(22) Date of filing: 27.02.2009
(51) Int. Cl.: F16C 29/04, A47B 9/20

(54) **Telescopic column**
Teleskopische Säule
Colonne télescopique

(43) Date of publication of application: 01.09.2010
(73) Proprietor: ROL Ergo AB, 550 09 Jönköping (SE)
(72) Inventor: Gustavsson, Hans, 563 31, GRÄNNA (SE)
(74) Representative: Willquist, Sofia Ellinor

(56) References cited:
- WO-A-2007/013827
- FR-A- 2 210 237
- US-A- 5 134 670

## Description

### Technical Field

The present disclosure relates to a telescopic column with an outer elongated element and an inner elongated element, the elements being capable of telescoping relative to each other. In particular, the present disclosure relates to a telescopic column with an outer elongated element and an inner elongated element and a telescopic arrangement arranged between the inner elongated element and the outer elongated element for facilitating a telescopic movement between the inner and outer elongated elements.

### Background

Telescopic columns are known for a wide range of applications. In particular, telescopic columns are used in vertically adjustable furniture, such as tables, for varying the height of the table top. However, telescopic columns are also used in other fields, such as in mechanical engineering.

In vertically adjustable furniture, a linear actuator is often used to adjust the furniture, such as the height of a table top. Such a linear actuator comprises a motor, a telescopic column and a threaded screw arranged inside the telescopic column. The motor is arranged to rotate the threaded screw, and the threaded screw is connected to the telescopic column such that when the screw is rotated, a telescopic movement takes place between two telescopically arranged tubes of the telescopic column.

Telescopic columns generally comprise an outer tube of rectangular or circular cross-section and an inner tube of the same cross-sectional shape but with a smaller diameter. For facilitating the telescopic movement between the inner and outer tube, there may be provided some kind of bearing arrangement between the tubes.

WO 2007/013827 and WO 8706439 describe a telescopic screw lift having a modular telescopic column. The column has module guides made up of linear double-row ball bearings mounted with external raceway and internal raceway to neighbouring wall surfaces.

US 2002/0050112 shows a telescopic column having three telescopically arranged tubes: an inner tube, an outer tube, and an intermediate tube arranged between the inner and outer tube. The tubes all have rectangular cross-section where each corner has a longitudinal groove for receiving at least one ball acting as a ball bearing between the inner tube and the intermediate tube and at least one ball acting as a ball bearing between the intermediate tube and the outer tube. The ball bearings facilitate the telescopic movement between the respective tubes. The longitudinal grooves each act as a guide for a ball. By such longitudinal grooves a lateral stability is achieved, i.e. the balls will not be easily deformed when the column is exposed to lateral forces. Although, such a telescopic column is rather complicated to produce and requires a rather high precision in the grooves.

Consequently, there is a need for another telescopic column with a high lateral stability.

### Summary

It is an object of the present invention to provide an improved solution that alleviates the mentioned drawbacks with present devices. Furthermore, it is an object to provide a cost-efficient telescopic column that has a high lateral stability, i.e. which can carry high transversal forces.

This is achieved by a telescopic column comprising an outer elongated element and an inner elongated element, the inner and outer elongated elements being capable of telescoping relative to each other. The column further comprises a telescoping arrangement arranged between the inner and outer elongated elements so as to facilitate a telescoping movement between the inner elongated element and the outer elongated element. The telescoping arrangement comprises a first elongated section securely arranged to the inner elongated element, and a second elongated section securely arranged to the outer elongated element, and a guiding element for connecting the first elongated section to the second elongated section and for guiding a telescoping movement between the first elongated section and the second elongated section.

The guiding element could be arranged with one part attached to the first elongated section and with one part attached to the second elongated section, the parts being arranged to co-operate with each other, or to engage each other, e.g. such that at least one of the parts grasps the other part. The guiding element is preferably an elongated element, extending at least along the portions of the elongated sections that are in contact when telescoping. For example, in a cross-sectional view of the telescopic column, the guiding element could comprise a bent, e.g. c- or u-shaped profile of the first elongated section and a bent e.g. c- or u-shaped profile of the second elongated section turned upside-down. The bent profiles are arranged such that they engage each other. The bent profiles have an elongated extension along the longitudinal axis of the telescopic column. According to an embodiment, the guiding element comprises a set of rolling bearings arranged between the profiles.

By having a telescopic arrangement with elongated sections arranged to the inner and outer elongated elements or tubes, as described in claim 1, a robust column is achieved that has a high lateral stability. By using a telescopic arrangement in which the inner and outer elements is not a part for achieving the telescoping movement, the inner and outer elongated elements will not be exposed to wear due to the telescoping movement. Consequently, the material for the inner and outer element could be selected with great liberty. Also, by arranging the telescopic function in a separate telescopic arrangement, the telescopic column will be easy to assemble.

According to an embodiment, the telescoping arrangement has two separate telescoping units, each unit having first and second elongated sections securely arranged to the inner and the outer elongated element, respectively, and having a guiding element for connecting and guiding a telescoping movement between the first and second elongated sections. Thereby, tolerances in the guiding means for achieving a well-functioning telescoping movement could be catered for in the separate telescoping units.

The first telescoping unit is securely arranged to a first side of the inner elongated element whereas the second telescoping unit is securely arranged to a second side of the inner elongated element. Thereby, the telescopic column is easy to assemble. The first telescoping unit is assembled to the first side of the inner elongated element and the second telescoping unit is assembled to the second side of the inner elongated element. Further, lateral forces from different directions are carried well, especially if the telescoping units are perpendicular to each other. Also, by such an arrangement is not necessary to have a telescoping arrangement extend along the whole circumference of the inner elongated element. The telescopic column would function well, and carry loads well with only two separate telescoping units.

According to the invention, the first side and the second side of the inner elongated element are situated within a cross-sectional area covering 180 degrees of the cross-sectional circumference of the inner elongated element. i.e. there are only telescoping units arranged within this 180 degrees cross-sectional area. There is no telescopic arrangement arranged between the inner elongated element and the outer elongated element outside this cross-sectional area. i.e. there will only be telescoping units arranged between the inner and outer elongated elements around up to half of the inner elongated elements' circumference. Since one half of the circumference of the inner elongated element will be free of telescoping units, manufacturing tolerances for the inner and outer elongated element can be high. This is because at mounting of the telescopic column the distance between the inner and outer elongated element can be adapted at the sides where the telescoping units are situated.

According to an embodiment of the invention, the first side of the inner elongated element and the second side of the inner elongated element are substantially perpendicular to each other. Thereby, the telescoping units are perpendicularly arranged in relation to each other. By having perpendicularly arranged telescoping units a telescopic column coping with lateral forces received in any direction is achieved.

According to another embodiment, each of the first telescoping unit and the second telescoping unit is pre-fabricated before the telescopic column is mounted. These separately produced telescoping units can thereafter be arranged to each of the inner and outer elongated elements to produce the telescopic column. Such telescoping units do not need to be especially adapted to a certain application and/or size of telescopic column. On the contrary they may be used in any kind of application where a telescopic movement is requested. Thereby, the telescoping unit can be mass-produced, which results in a cost-efficient telescopic column

According to yet another embodiment, each of the first and second telescoping units further comprises a third elongated section arranged between the first elongated section and the second elongated section. Further, the guiding element comprises a first guiding element for connecting the first elongated section to the third elongated section and for guiding a telescoping movement between the first elongated section and the third elongated section, and a second guiding element for connecting the third elongated section to the second elongated section and for guiding a telescoping movement between the third elongated section and the second elongated section. By such a telescopic column, a longer telescopic movement is achieved compared to a telescopic column with telescoping units having only two elongated sections with guiding elements in between.

According to an embodiment of the invention, the guiding elements further each comprises a set of bearings, for facilitating the telescopic movement between the sections. Thereby, there will be low wear on the two elongated sections when they are telescoping. The bearings in the set of bearings could be rolling bearings. By using rolling bearings as bearing elements, a low wear and a low friction could be achieved. By a rolling bearing is meant a bearing comprising any kind of rolling bodies, such as roller bearings, cylinder bearings, ball bearings etc.

According to another embodiment, the sets of rolling bearings each comprises a plurality of rollers, such as balls, arranged along the longitudinal axis of the column. Thereby, transversal forces will be well-carried. In addition, the telescopic movement is better controlled than by using only one or a small number of rollers.

### Brief Description of the Drawings

The invention will in the following be described in more detail with reference to the enclosed drawings, wherein:
Fig 1 is a schematic perspective view of an embodiment of a telescopic column according to the invention.
Fig 2 is a cross-sectional view of the telescopic column shown in figure 1.
Fig 3 is a perspective view of a telescoping unit of the telescopic column of figure 1. Fig. 3 also shows an enlargement of a part of this telescoping unit.
Fig 4 is a perspective view of another embodiment of a telescopic column according to the invention.
Fig 5 is a cross-sectional view of the telescopic column of fig. 4.
Figs 6a-c are perspective views illustrating steps for mounting a telescopic column according to the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

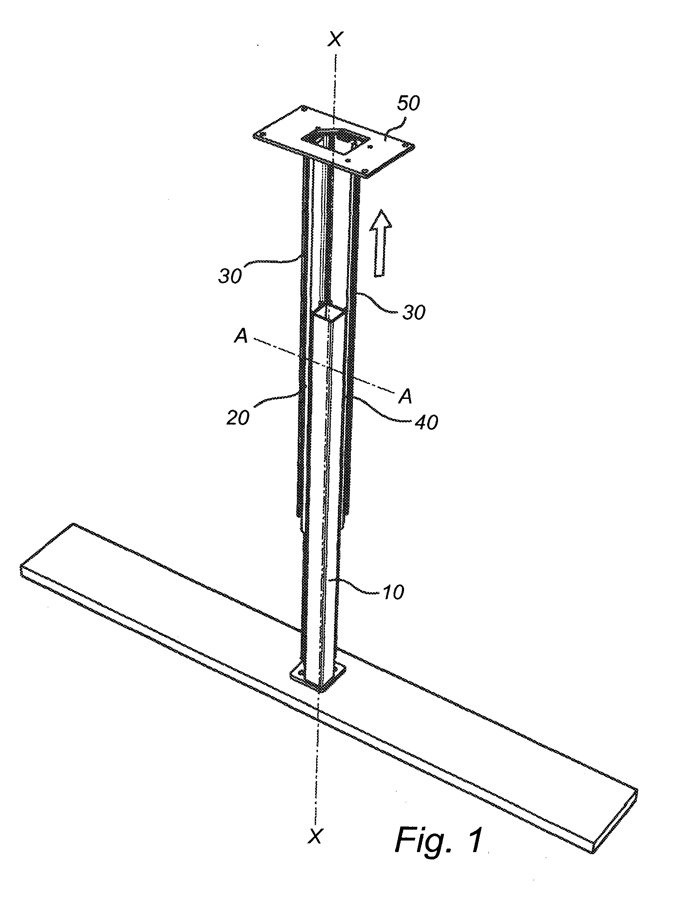

Figure 1 describes a telescopic column according to the invention having an extension along its longitudinal axis X. The longitudinal axis X of the telescopic column is defined as parallel to the telescopic movement direction of the column. The telescopic column is elongated in a direction that is parallel to the longitudinal axis. In the document, when a feature is elongated it generally has an extension direction that is parallel to the longitudinal axis. In figure 1, the telescopic column is arranged on a base 70. The telescopic column comprises an inner elongated tubular element 10 with a square-shaped cross-section, an outer elongated element 30, a first telescoping unit 20 and a second telescoping unit 40. The first telescoping unit 20 and the second telescoping unit 40 are arranged between the inner elongated tubular element 10 and the outer elongated element 30.

The telescopic column of fig 1 further comprises a horizontally arranged top plate 50 arranged to an upper part of the outer elongated element 30. The top plate 50 has a general extension substantially perpendicular to the longitudinal axis X. The telescopic column could be used in a linear actuator. Such a linear actuator comprises, except for the telescopic column, a motor arranged to the top plate 50 and a threaded screw arranged inside the inner tubular element 10 of the telescopic column. Further, there is a threaded nut securely arranged inside the inner tubular element. The motor is arranged to rotate the threaded screw, and the threaded screw is connected to the threaded nut such that when the screw is rotated, a telescopic movement takes place between the inner and outer elongated element.

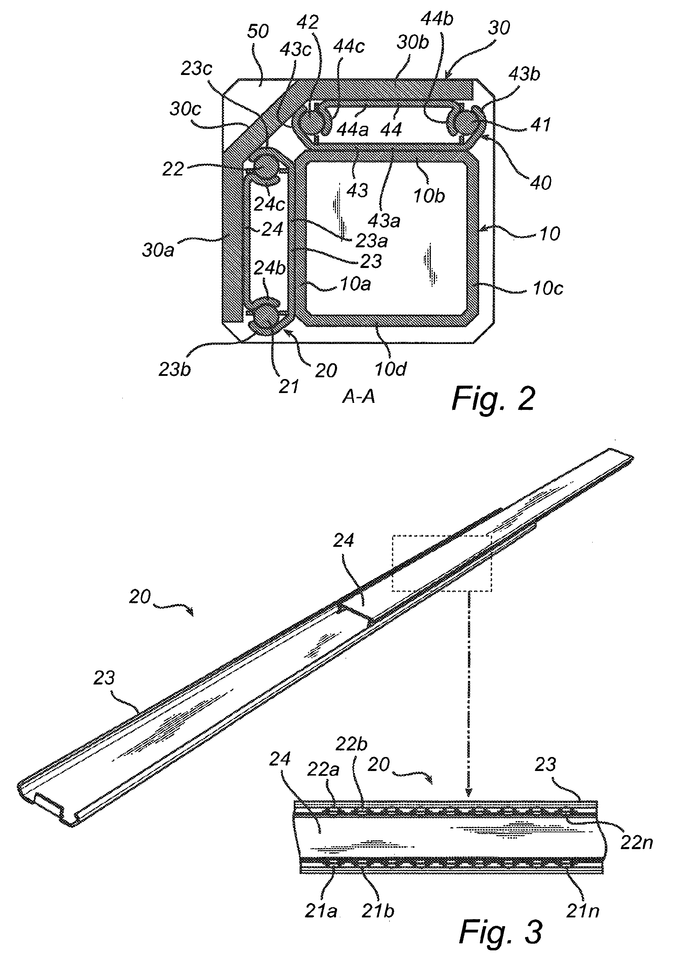

As can be seen more clearly in the cross-sectional view of fig. 2, the first telescoping unit 20 is arranged between a first side 10a of the inner elongated element and a first side 30a of the outer elongated element 30. The second telescoping unit 40 is arranged between a second side 10b of the inner elongated element and a second side 30b of the outer elongated element. The first side 10a and the second side 10b of the inner elongated element are substantially perpendicular to each other. There are no telescoping units arranged to the other sides 10c, 10d of the tubular, square-shaped inner element.

The outer elongated element 30 has an angled cross-section having three parts, where its first part 30a is substantially parallel to the first side 10a of the inner tubular element and its second part 30b is substantially parallel to the second side 10b of the inner tubular element, and, consequently, its second part is substantially perpendicular to its first part. The first and the second parts 30a, 30b are connected by an intermediate part 30c angled about 45 degrees in relation to both the first part and the second part.

Further, with reference to fig. 2, the first telescoping unit 20 comprises a first elongated section 23 securely arranged to the first side 10a of the inner tubular element and a second elongated section 24 securely arranged to the first part 30a of the outer elongated element. The first telescoping unit 20 further comprises a set of rolling bearings 21, 22 arranged between the first elongated section 23 and the second elongated section 24. The first elongated section 23 and the second elongated section 24 each has a main cross-sectional extension that is parallel to the first side of the inner elongated element 10 and the first part of the outer elongated element 30, respectively. Further, at their cross-sectional ends, the first elongated section 23 and the second elongated section 24 are each shaped such that an elongated guide is provided at each end. Each of the elongated guides is arranged to receive a subset 21 or 22 of the set of rolling bearings 21, 22. Together, the guides and the set of rolling bearings provides a guiding element for connecting the first elongated section 23 to the second elongated section 24 and for guiding a telescoping movement between the first elongated section and the second elongated section.

More specifically, the first elongated section 23 has a straight main part 23a, parallel to the first side 10a of the inner tubular element, a first end part 23b and a second end part 23c, the end parts 23b, 23c each extending from a respective end of the main part 23a in a direction away from the first side 10a of the inner tubular element and away from each other. The end parts 23b, 23c then each have a further extension where they are bent towards each other. The end parts 23b, 23c thereby each provide a c-shaped profile. Similarly, the second elongated section 24 has a straight main part 24a, parallel to the first side 30a of the outer elongated element, a first end part 24b and a second end part 24c, the end parts 24b, 24c each extending from a respective end of the main part 24a in a direction away from the first side 30d of the outer elongated element and towards each other. The end parts 24b, 24c then each have a further extension where they are bent away from each other. The end parts 24b, 24c thereby each provide a c-shaped profile. The c-shaped profile created by the first end part 24b of the second elongated section 24 and the c-shaped profile created by the first end part 23b of the first elongated section 23 are arranged opposite to each other with its open ends directed towards each other to thereby create a guide for receiving and guiding a subset 21 of the set of roller bearings 21, 22. Similarly, the c-shaped profile created by the second end part 24c of the second elongated section 24 and the c-shaped profile created by the second end part 23c of the first elongated section 23 are arranged opposite to each other to thereby create a guide for receiving and guiding the other subset 22 of the set of roller bearings 21, 22.

In a similar way as for the first telescoping unit 20, the second telescoping unit 40 comprises a first elongated section 43 securely arranged to the second side 10b of the inner tubular element and a second elongated section 44 securely arranged to the second part 30b of the outer elongated element. The second telescoping unit 40 further comprises a set of rolling bearings 41, 42 arranged between the first elongated section 43 and the second elongated section 44. The first elongated section and the second elongated section each has a main cross-sectional extension that is parallel to the second sides 10b, 30b of the inner elongated element 10 and the outer elongated element 30, respectively. Further, at their cross-sectional ends, the first elongated section 43 and the second elongated section 44 are each shaped such that an elongated guide is provided at each end. Each of the elongated guides is arranged to receive a subset 41 or 42 of the set of roller bearings 41, 42. Together, the guides and the set of rolling bearings provides a guiding element for connecting the first elongated section 43 to the second elongated section 44 and for guiding a telescoping movement between the first elongated section and the second elongated section.

Further, the second telescoping unit 40 has a similar construction as the first telescoping unit 20. For this reason, for a more detailed description of the first and second elongated section 43, 44 of the second telescoping unit 40, see the description above for the first and second elongated section of the first telescoping unit 20.

Figure 3 is a perspective view of a telescoping unit 20, 40 of the invention. In this figure, the telescoping unit 20 is in its extended mode, where the first elongated section 23 and the second elongated section 24 have been telescopically moved away from each other. As can be seen in the enlarged part of the figure, each subset of rolling bearings 21, 22 comprises a number of balls 21 a, 21 b, ..., 21 n etc and 22a, 22b, ..., 22n etc arranged in a row. In an embodiment of the invention, the number of connected balls is ten. As understood, each subset of rolling bearings has an extension that is parallel to the elongated sections and, consequently, parallel to the longitudinal axis of the telescopic column, when the telescoping unit 20 has been arranged to a telescopic column. Further, each of the balls of a subset of rolling bearings is arranged in a ball holder for better controlling the movement of the balls.

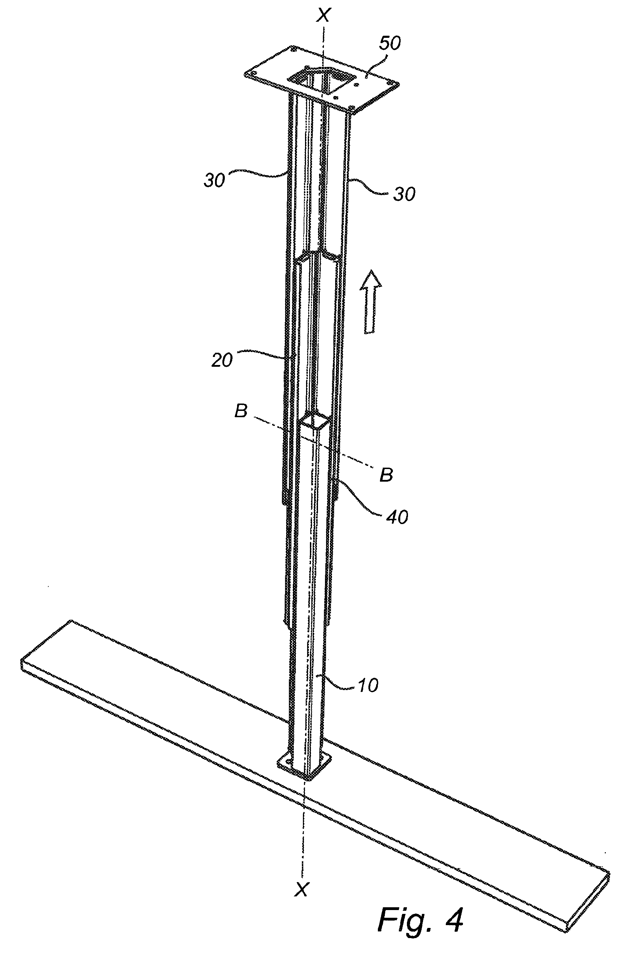

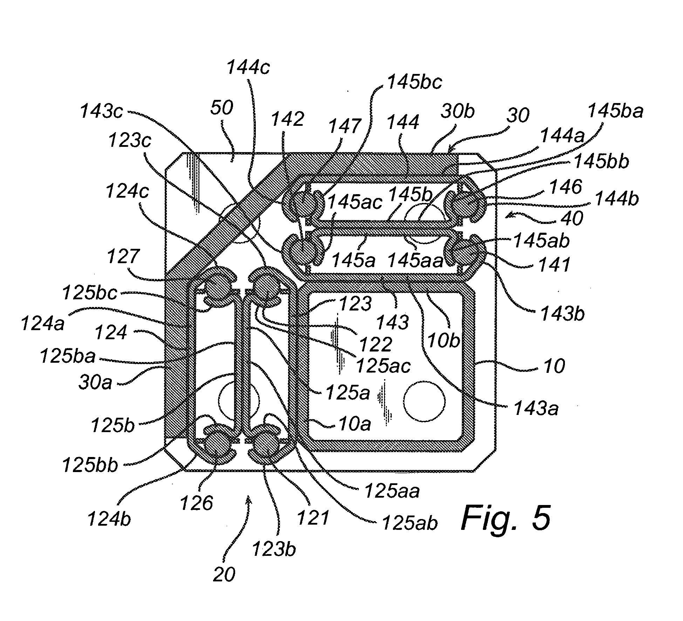

Figures 4-6 show another embodiment of the invention. In addition to the embodiment shown in figures 1-3, the first and the second telescoping unit 20, 40 each comprises a third elongated section 125, 145 arranged between the first and the second elongated section to achieve a longer telescopic movement. This is achieved by a telescopic movement between three parts, the first elongated section 123, 143, the third elongated section 125, 145 and the second elongated section 124, 144.

For this reason, the first elongated section 123 of the first telescoping unit 20 is securely arranged to the first side 10a of the inner tubular element and the second elongated section 124 of the first telescoping unit is securely arranged to the first part 30a of the outer elongated element. A first set of rolling bearings 121, 122 is arranged between the first elongated section 123 and the third elongated section 125 for facilitating a telescopic movement between the first and the third elongated section. A second set of rolling 126, 127 bearings is arranged between the third elongated section 125 and the second elongated section 124 for facilitating a telescopic movement between the third and the second elongated section.

The third elongated section 125 comprises a first part 125a and a second part 125b. The first elongated section 123, the second elongated section 124 and the first and second parts 125a, 125b of the third elongated section each has a main cross-sectional extension that is parallel to the first sides 10a, 30a of the inner elongated element 10 and the outer elongated element 30, respectively. Further, at their cross-sectional ends, the first elongated section 123, and the first part 125a of the third elongated section are each shaped such that an elongated guide is arranged at each end, each of the elongated guides being arranged to receive a subset 121 or 122 of the first set of rolling bearings 121, 122. Similarly, at their cross-sectional ends, the second elongated section 124, and the second part 125b of the third elongated section are each shaped such that an elongated guide is arranged at each end, each of the elongated guides being arranged to receive a subset 126 or 127 of the second set of rolling bearings 126, 127. Together, the guides of the first and third elongated section and the set of rolling bearings arranged in the guides provides a guiding element for connecting the first elongated section 123 to the third elongated section 125 and for guiding a telescoping movement between the first elongated section and the third elongated section. Similarly, the guides of the second and third elongated section and the set of rolling bearings arranged in the guides provides a guiding element for connecting the third elongated section 125 to the second elongated section 124 and for guiding a telescoping movement between the second elongated section and the third elongated section.

More specifically, the first elongated section 123 has a straight main part 123a, parallel to the first side 10a of the inner tubular element, a first end part 123b and a second end part 123c. The end parts 123b, 123c each extends from a respective end of the main part 123a in a direction away from the first side 10a of the inner tubular element and away from each other, and are then bent towards each other such that they have a further extension in a direction away from the first side and towards each other. Thereby, a c-shaped profile is created. Similarly, the first part of the third elongated section 125a has a straight main part 125aa, parallel to the first side 30a of the outer elongated element, a first end part 125ab and a second end part 125ac, the end parts 125ab, 125ac each extending from a respective end of the main part 125aa in a direction away from the first side 30d of the outer elongated element and towards each other. The end parts 125ab, 125ac of the first part of the third elongated section then each has a further extension where they are bent away from each other. Thereby, a c-shaped profile is created. The c-shaped profile created by the first end part 125ab of the first part of the third elongated section 125 and the c-shaped profile created by the second end part 123b of the first elongated section 123 are arranged opposite to each other with their open ends towards each other to receive a subset 121 of the first set of roller bearings 121, 122. Similarly, the c-shaped profile created by the second end part 125ac of the first part of the third elongated section 125 and the c-shaped profile created by the third part 123c of the first elongated section 123 are arranged opposite with their open ends towards each other to receive the other subset 122 of the first set of roller bearings 121, 122.

Further, the second part 125b of the third elongated section 125 has a straight main part 125ba, parallel to the first side 10a of the inner tubular element, a first end part 125bb and a second end part 125bc, the end parts 125bb, 125bc each extending from a respective end of the main part 125ba in a direction away from the first side 10a of the inner tubular element and towards each other. The straight main part 125ba of the second part 125b of the third elongated section 125 is arranged to the straight main part 125ab of the first part 125a of the third elongated section 125. Further, the ends parts 125bb, 125bc then each has a further extension where they are bent away from each other. Thereby, a c-shaped profile is created for receiving a roller or ball of a rolling bearing. Similarly, the second elongated section 124 has a straight main part 124a, parallel to the first side 30a of the outer elongated element, a first end part 124b and a second end part 124c, the end parts 124b, 124c each extending from a respective end of the main part 124a in a direction away from the first side 30d of the outer elongated element and towards each other. The end parts 124b, 124c then each have a further extension where they are bent towards each other. Thereby, a c-shaped profile is created for receiving a roller or ball of a rolling bearing. The c-shaped profile created by the first end part 125bb of the second part 125b of the third elongated section 125 and the c-shaped profile created by the second part 124b of the second elongated section 124 are arranged opposite to each other with their open ends towards each other for receiving a subset 126 of the second set of roller bearings 126, 127. Similarly, the c-shaped profile of the second end part 125ac of the first part of the third elongated section 125 and the c-shaped profile of the third part 124c of the second elongated section 124 are arranged opposite with their open ends towards each other for receiving the other subset 127 of the second set of roller bearings 126, 127.

In a similar way as for the first telescoping unit 20, the second telescoping unit 40 comprises a first elongated section 143 securely arranged to the second side 10b of the inner tubular element and a second elongated section 144 securely arranged to the second part 30b of the outer elongated element. The first set of rolling bearings 141, 142 is arranged between the first elongated section 143 and the third elongated section 145 for facilitating a telescopic movement between the first and the third elongated section. The second set of rolling bearings 146, 147 is arranged between the third elongated section 145 and the second elongated section 144 for facilitating a telescopic movement between the third and the second elongated section.

For this reason, the first elongated section 143 of the second telescoping unit 40 is securely arranged to the second side 10b of the inner tubular element and the second elongated section 144 of the second telescoping unit is securely arranged to the second part 30b of the outer elongated element. The first set of rolling bearings 141, 142 is arranged between the first elongated section 143 and the third elongated section 145 for facilitating a telescopic movement between the first and the third elongated section. The second set of rolling 146, 147 bearings is arranged between the third elongated section 145 and the second elongated section 144 for facilitating a telescopic movement between the third and the second elongated section.

The third elongated section 145 comprises a first part 145a and a second part 145b. The first elongated section 143, the second elongated section 144 and the first and second parts 145a, 145b of the third elongated section each has a main cross-sectional extension that is parallel to the second sides 10b, 30b of the inner elongated element 10 and the outer elongated element 30, respectively. Further, at their cross-sectional ends, the first elongated section 143, and the first part 145a of the third elongated section are each shaped such that an elongated guide is arranged at each end, each of the elongated guides being arranged to receive a subset 141 or 142 of the first set of rolling bearings 141, 142. Similarly, at their cross-sectional ends, the second elongated section 144, and the second part 145b of the third elongated section are each shaped such that an elongated guide is arranged at each end, each of the elongated guides being arranged to receive a subset 146 or 147 of the second set of rolling bearings 146, 147. Together, the guides of the first and third elongated section and the set of rolling bearings arranged in the guides provides a guiding element for connecting the first elongated section 143 to the third elongated section 145 and for guiding a telescoping movement between the first elongated section and the third elongated section. Similarly, the guides of the second and third elongated section and the set of rolling bearings arranged in the guides provides a guiding element for connecting the third elongated section 145 to the second elongated section 144 and for guiding a telescoping movement between the second elongated section and the third elongated section.

Further, the second telescoping unit 40 has a similar construction as the first telescoping unit 20. For this reason, for a more detailed description of the first, second and third elongated section 143, 144, 145 of the second telescoping unit 40, see the description above for the first, second and third elongated section 123, 124, 125 of the first telescoping unit 20.

Further, each subset of rolling bearings 121, 122, 126, 127, 141, 142, 146, 147 is arranged in the same way as described for the first embodiment of the invention, in connection with figure 3.

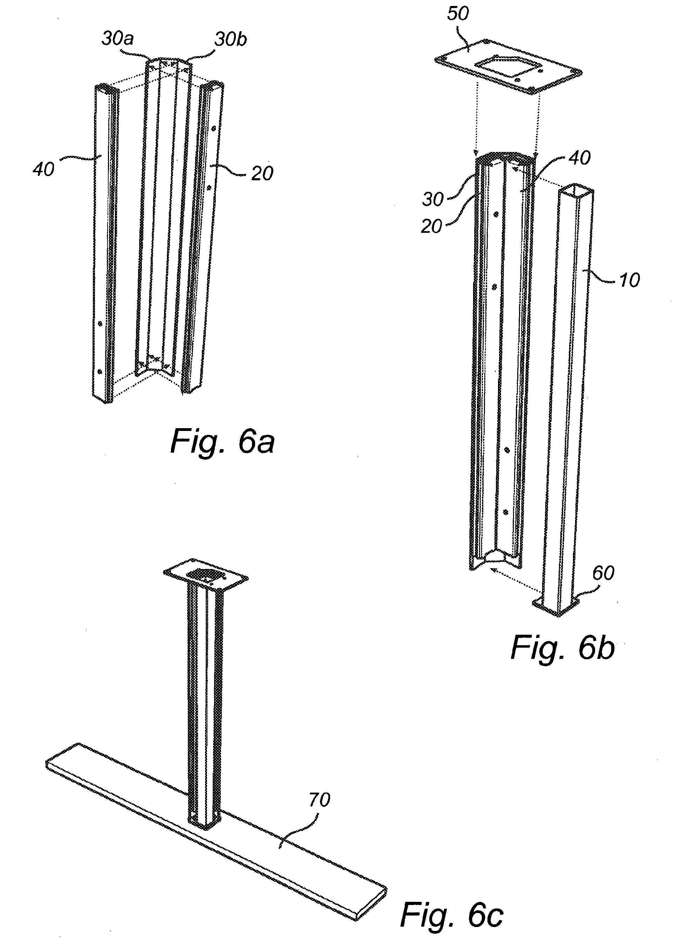

Figures 6a-6c describes the procedure for mounting a telescopic column according to the invention.

In a first step shown in figure 6a, the first telescoping unit 20 is arranged to the first part 30a of the outer elongated element and the second telescoping unit 40 is arranged to the second part 30b of the outer elongated element. The second elongated section 24, 124 of the first telescoping unit 20 is arranged such that it bears against an inner surface of the first part 30a of the outer elongated element 30 and the second elongated section 44, 144 of the second telescoping unit 40 is arranged such that it bears against an inner surface of the second part 30b of the outer elongated element 30. The telescoping units may be welded to the respective part.

In a second step, the inner tubular element 10 is arranged to the first and second telescoping units such that the first side 10a of the inner tubular element 10 bears against the first elongated section 23, 123 of the first telescoping unit 20 and that the second side 10b of the inner tubular element 10 bears against the first elongated section 43, 143 of the second telescoping unit 40. Prior to this step, the inner tubular element 10 may have been arranged with a bottom plate 60 to its bottom part, such that the bottom plate has a main extension direction that is perpendicular to the main extension direction of the tubular element. Also, the top plate 50 is arranged to the outer elongated element 30. Alternatively, the top plate may have been arranged to the outer elongated element before the first step is accomplished.

Thereafter, the telescopic column is mounted to a base 70 (Fig. 6c) by mounting the bottom plate 60 to the base 70. When the telescopic column is in use, the top plate 50 will follow the movement of the telescopic column away from the base 70, whereas the bottom plate 60 will of course, stand still on the base.

By such an arrangement having telescoping units 20, 40 only arranged at two of the four sides of inner tubular element, this mounting procedure is very much facilitated since possible dimension deviations between the inner and outer tubular element will be taken up by the two sides lacking telescoping units. Also, as seen from the figures 6a-c good contact between the telescoping units and the inner and outer tubular elements is guaranteed.

Onto the top plate 50, a housing for a motor can be arranged. Such a motor can be arranged to drive a threaded screw arranged inside the inner tubular element for achieving the telescopic movement between the inner and outer elongated element 10, 30. Also, onto the top plate 50 a table top may be arranged. It is also possible that one or more protecting tubes of e.g. rectangular cross-section is arranged outside the telescopic column, to surround the telescopic column. The protecting tube may be of any material. The protecting tube does not need to be of a load-carrying material.

In the drawings, telescopic columns are disclosed having two or three elongated elements capable of telescoping in relation to each other. As apparent to the person skilled in the art, the invention may also be applicable to telescopic columns having more than three elongated elements capable of telescoping in relation to each other.

In the drawings and specification, there have been disclosed preferred embodiments and examples of the invention and, although specific terms are employed, they are used in a generic and descriptive sense only, the scope of the invention being set forth in the following claims.

## Claims

1. A telescopic column having an elongated extension along its longitudinal axis, the column comprising:
an outer elongated element (30);
an inner elongated element (101) with first and second sides (10a, 10b), the inner and outer elongated elements being capable of telescoping relative to each other,
a telescoping arrangement (20, 40) arranged between the inner and outer elongated elements (10, 30) so as to facilitate a telescoping movement between the inner elongated element and the outer elongated element,
wherein the telescoping arrangement (20, 40) comprises:
a first telescoping unit (20) having a first elongated section (23) securely arranged to the inner elongated element (10) and a second elongated section (24) securely arranged to the outer elongated element (30) and a first guiding element (23c, 24c, 23b, 24b) for connecting the first elongated section (23) to the second elongated section (24) and for guiding a telescoping movement between the first elongated section and the second elongated section, and
a second telescoping unit (40) having a first elongated section (43) securely arranged to the inner elongated element (10) and a second elongated section (44) securely arranged to the outer elongated element (30) and a second guiding element (43b, 43c, 44b, 44c) for connecting the first elongated section (43) to the second elongated section (44) and for guiding a telescoping movement between the first elongated section and the second elongated section, wherein the first elongated section (23) of the first telescoping unit (20) is securely arranged to the first side (10a) of the inner elongated element (10) and the second elongated section (24) of the first telescoping unit (20) is securely arranged to the outer elongated element (30), and the first elongated section (43) of the second telescoping unit (40) is securely arranged to the second side (10b) of the inner elongated element (10) and the second elongated section (44) of the second telescoping unit (40) is securely arranged to the outer elongated element (30), **characterized in that** the first side (10a) and the second side (10b) of the inner elongated element are situated within a cross-sectional area covering 180 degrees of the cross-sectional circumference of the inner elongated element, and that there is no telescopic arrangement arranged between the inner elongated element (10) and the outer elongated element (30) outside this cross-sectional area.

2. Telescopic column according to claim 1, wherein the first telescoping unit (20) and the second telescoping unit (40) are arranged to the inner elongated element (10) and the outer elongated element (30) separated from each other.

3. Telescopic column according to claim 1, wherein the first side (10a) of the inner elongated element and the second side (10b) of the inner elongated element are substantially perpendicular to each other.

4. Telescopic column according to any of claims 1-3, wherein the inner elongated element (10) has a rectangular cross-section.

5. Telescopic column according to any of claims 1-4, wherein the telescoping units (20, 40) are only arranged between the inner elongated element (10) and the outer elongated element (30) at the first side (10a) and the second side (10b) of the inner elongated element.

6. Telescopic column according to any of claims 1-5, wherein each of the guiding elements (23c, 24c, 23b, 24b, 43b, 43c, 44b, 44c) is realized by each of the first and the second elongated sections (23, 24, 43, 44) having an elongated bent profile, the profiles of a guiding element being arranged in such a way that they engage each other.

7. Telescopic column according to any of claims 1-6, wherein the guiding element further comprises a set of bearings (21, 22, 41, 42) for facilitating the telescopic movement between the first elongated section (23, 43) and the second elongated section (24, 44).

8. Telescopic column according to claim 7, wherein the bearings in the set of bearings (21, 22, 41, 42) are rolling bearings.

9. Telescoping column according to claim 8, wherein the set of rolling bearings (21, 22, 41, 42) each comprises a plurality of rollers, such as balls, arranged along the longitudinal axis of the column.

10. Telescopic column according to any of claims 1-9, wherein each of the first and second telescoping units (20, 40) further comprises:
a third elongated section arranged between the first elongated section (123, 143) and the second elongated section (124, 144), and wherein the guiding elements comprise:
a third guiding element (125ac, 123c, 123b, 125ab 145ac, 143c, 143b, 145ab) for connecting the first elongated section (123, 143) to the third elongated section (125, 145) and for guiding a telescoping movement between the first elongated section and the third elongated section, and
a fourth guiding element (124b, 125bb, 124c, 125bc, 144b, 145bb, 144c, 145bc) for connecting the third elongated section (125, 145) to the second elongated section (124, 144) and for guiding a telescoping movement between the third elongated section and the second elongated section.

## Patentansprüche

1. Teleskopsäule mit einer länglichen Erweiterung entlang ihrer Längsachse, wobei die Säule Folgendes umfasst:
ein äußeres längliches Element (30),
ein inneres längliches Element (10) mit einer ersten und einer zweiten Seite (10a, 10b), wobei das innere und das äußere längliche Element in der Lage sind, sich teleskopartig im Verhältnis zueinander zu verschieben,
eine Teleskopanordnung (20, 40), die derart zwischen dem inneren und dem äußeren länglichen Element (10, 30) angeordnet ist, dass eine Teleskopbewegung zwischen dem inneren länglichen Element und dem äußeren länglichen Element unterstützt wird,
wobei die Teleskopanordnung (20, 40) Folgendes umfasst:
eine erste Teleskopeinheit (20) mit einem ersten länglichen Abschnitt (23), der fest am inneren länglichen Element (10) angeordnet ist, und einem zweiten länglichen Abschnitt (24), der fest am äußeren länglichen Element (30) angeordnet ist, und ein erstes Führungselement (23c, 24c, 23b, 24b) zum Verbinden des ersten länglichen Abschnittes (23) mit dem zweiten länglichen Abschnitt (24) und zum Führen einer Teleskopbewegung zwischen dem ersten länglichen Abschnitt und dem zweiten länglichen Abschnitt, und
eine zweite Teleskopeinheit (40) mit einem ersten länglichen Abschnitt (43), der fest am inneren länglichen Element (10) angeordnet ist, und einem zweiten länglichen Abschnitt (44), der fest am äußeren länglichen Element (30) angeordnet ist, und ein zweites Führungselement (43b, 43c, 44b, 44c) zum Verbinden des ersten länglichen Abschnittes (43) mit dem zweiten länglichen Abschnitt (44) und zum Führen einer Teleskopbewegung zwischen dem ersten länglichen Abschnitt und dem zweiten länglichen Abschnitt, wobei der erste längliche Abschnitt (23) der ersten Teleskopeinheit (20) fest an der ersten Seite (10a) des inneren länglichen Elements (10) angeordnet ist und der zweite längliche Abschnitt (24) der ersten Teleskopeinheit (20) fest am äußeren länglichen Element (30) angeordnet ist und der erste längliche Abschnitt (43) der zweiten Teleskopeinheit (40) fest an der zweiten Seite (10b) des inneren länglichen Elements (10) angeordnet ist und der zweite längliche Abschnitt (44) der zweiten Teleskopeinheit (40) fest am äußeren länglichen Element (30) angeordnet ist,
**dadurch gekennzeichnet, dass** sich die erste Seite (10a) und die zweite Seite (10b) des inneren länglichen Elements in einem Querschnittsbereich befinden, der 180 Grads des Querschnittsumfanges des inneren länglichen Elements einnimmt, und dass sich außerhalb dieses Querschnittsbereiches keine zwischen dem inneren länglichen Element (10) und dem äußeren länglichen Element (30) angeordnete Teleskopanordnung befindet.

2. Teleskopsäule nach Anspruch 1, wobei die erste Teleskopeinheit (20) und die zweite Teleskopeinheit (40) getrennt vorneinander am inneren länglichen Element (10) und am äußeren länglichen Element (30) angeordnet sind.

3. Teleskopsäule nach Anspruch 1, wobei die erste Seite (10a) des inneren länglichen Elements und die zweite Seite (10b) des inneren länglichen Elements im Wesentlichen senkrecht zueinander liegen.

4. Teleskopsäule nach einem der Ansprüche 1 bis 3, wobei das innere längliche Element (10) einen rechteckigen Querschnitt aufweist.

5. Teleskopsäule nach einem der Ansprüche 1 bis 4, wobei die Teleskopeinheiten (20 ,40) nur zwischen dem inneren länglichen Element (10) und dem äußeren länglichen Element (30) an der ersten Seite (10a) und der zweiten Seite (10b) des inneren länglichen Elements angeordnet sind.

6. Teleskopsäule nach einem der Ansprüche 1 bis 5, wobei jedes der Führungselemente (23c, 24c, 23b, 24b, 43b, 43c, 44b, 44c) durch jeweils die ersten und die zweiten länglichen Abschnitte (23, 24, 43, 44) umgesetzt ist, die ein längliches gebogenes Profil aufweisen, wobei die Profile eines Führungselements derart angeordnet sind, dass sie ineinander eingreifen.

7. Teleskopsäule nach einem der Ansprüche 1 bis 6, wobei das Führungselement ferner eine Gruppe von Lagern (21, 22, 41, 42) umfasst, um die Teleskopbewegung zwischen dem ersten länglichen Abschnitt (23, 43) und dem zweiten länglichen Abschnitt (24, 44) zu unterstützen.

8. Teleskopsäule nach Anspruch 7, wobei die Lager in der Gruppe von Lagern (21, 22, 41, 42) Wälzlager sind.

9. Teleskopsäule nach Anspruch 8, wobei in der Gruppe von Wälzlagern (21, 22, 41, 42) jedes mehrere Rollen umfasst, wie beispielsweise Kugeln, die entlang der Längsachse der Säule angeordnet sind.

10. Teleskopsäule nach einem der Ansprüche 1 bis 9, wobei die erste und die zweite Teleskopeinheit (20, 40) jeweils ferner Folgendes umfassen:
einen dritten länglichen Abschnitt, der zwischen dem ersten länglichen Abschnitt (123, 143) und dem zweiten länglichen Abschnitt (124, 144) angeordnet ist, und wobei die Führungselemente Folgendes umfassen:
ein drittes Führungselement (125ac, 123c, 123b, 125ab, 145ac, 143c, 143b, 145ab) zum Verbinden des ersten länglichen Abschnittes (123, 143) mit dem dritten länglichen Abschnitt (125, 145) und zum Führen einer Teleskopbewegung zwischen dem ersten länglichen Abschnitt und dem dritten länglichen Abschnitt, und
ein viertes Führungselement (124b, 125bb, 124c, 125bc, 144b, 145bb, 144c, 145bc) zum Verbinden des dritten länglichen Abschnittes (125, 145) mit dem zweiten länglichen Abschnitt (124, 144) und zum Führen einer Teleskopbewegung zwischen dem dritten länglichen Abschnitt und dem zweiten länglichen Abschnitt.

## Revendications

1. Colonne télescopique présentant une extension allongée le long de son axe longitudinal, la colonne comprenant :
un élément allongé extérieur (30) ;
un élément allongé intérieur (10) comprenant des premier et second côtés (10a, 10b), les éléments allongés intérieur et extérieur étant capables d'être télescopiques l'un par rapport à l'autre,
un agencement télescopique (20, 40) agencé entre les éléments allongés intérieur et extérieur (10, 30) de façon à faciliter un mouvement télescopique entre l'élément allongé intérieur et l'élément allongé extérieur,
sachant que l'agencement télescopique (20, 40) comprend :
une première unité télescopique (20) présentant une première section allongée (23) agencée fixement sur l'élément allongé intérieur (10) et une deuxième section allongée (24) agencée fixement sur l'élément allongé extérieur (30) et un premier élément de guidage (23c, 24c, 23b, 24b) pour connecter la première section allongée (23) à la deuxième section allongée (24) et pour guider un mouvement télescopique entre la première section allongée et la deuxième section allongée, et
une seconde unité télescopique (40) présentant une première section allongée (43) agencée fixement sur l'élément allongé intérieur (10) et une deuxième section allongée (44) agencée fixement sur l'élément allongé extérieur (30) et un deuxième élément de guidage (43b, 43c, 44b, 44c) pour connecter la première section allongée (43) à la deuxième section allongée (44) et pour guider un mouvement télescopique entre la première section allongée et la deuxième section allongée, sachant que la première section allongée (23) de la première unité télescopique (20) est agencée fixement sur le premier côté (10a) de l'élément allongé intérieur (10) et la deuxième section allongée (24) de la première unité télescopique (20) est agencée fixement sur l'élément allongé extérieur (30), et la première section allongée (43) de la seconde unité télescopique (40) est agencée fixement sur le second côté (10b) de l'élément allongé intérieur (10) et la deuxième section allongée (44) de la seconde unité télescopique (40) est agencée fixement sur l'élément allongé extérieur (30), **caractérisé en ce que** le premier côté (10a) et le second côté (10b) de l'élément allongé intérieur sont situés à l'intérieur d'une surface de section transversale couvrant 180 degrés de la circonférence de section transversale de l'élément allongé intérieur, et qu'il n'y a pas d'agencement télescopique agencé entre l'élément allongé intérieur (10) et l'élément allongé extérieur (30) en-dehors de cette surface de section transversale.

2. Colonne télescopique selon la revendication 1, dans laquelle la première unité télescopique (20) et la seconde unité télescopique (40) sont agencées sur l'élément allongé intérieur (10) et l'élément allongé extérieur (30) séparés l'un de l'autre.

3. Colonne télescopique selon la revendication 1, dans laquelle le premier côté (10a) de l'élément allongé intérieur et le second côté (10b) de l'élément allongé intérieur sont essentiellement perpendiculaires l'un à l'autre.

4. Colonne télescopique selon l'une quelconque des revendications 1 à 3, dans laquelle l'élément allongé intérieur (10) présente une section rectangulaire.

5. Colonne télescopique selon l'une quelconque des revendications 1 à 4, dans laquelle les unités télescopiques (20, 40) sont agencées uniquement entre l'élément allongé intérieur (10) et l'élément allongé extérieur (30) sur le premier côté (10a) et le second côté (10b) de l'élément allongé intérieur.

6. Colonne télescopique selon l'une quelconque des revendications 1 à 5, dans laquelle chacun des éléments de guidage (23c, 24c, 23b, 24b, 43b, 43c, 44b, 44c) est réalisé par chacune des première et deuxième sections allongées (23, 24, 43, 44) présentant un profilé cintré allongé, les profilés d'un élément de guidage étant agencés de telle sorte qu'ils se mettent en prise les uns les autres.

7. Colonne télescopique selon l'une quelconque des revendications 1 à 6, dans laquelle l'élément de guidage comprend en outre un jeu de paliers (21, 22, 41, 42) pour faciliter le mouvement télescopique entre la première section allongée (23, 43) et la deuxième section allongée (24, 44).

8. Colonne télescopique selon la revendication 7, dans laquelle les paliers dans le jeu de paliers (21, 22, 41, 42) sont des paliers à roulement.

9. Colonne télescopique selon la revendication 8, dans laquelle le jeu de paliers à roulement (21, 22, 41, 42) comprend chacun une pluralité de roulements, telles que des billes, agencées le long de l'axe longitudinal de la colonne.

10. Colonne télescopique selon l'une quelconque des revendications 1 à 9, dans laquelle chacune des première et seconde unités télescopiques (20, 40), comprend en outre :
une troisième section allongée agencée entre la première section allongée (123, 143) et la seconde section allongée (124, 144), et dans laquelle les éléments de guidage comprennent :
un troisième élément de guidage (125ac, 123c, 123b, 125ab, 145ac, 143c, 143b, 145ab) pour connecter la première section allongée (123, 143) à la troisième section allongée (125, 145) et pour guider un mouvement télescopique entre la première section allongée et la troisième section allongée, et
un quatrième élément de guidage (124b, 125bb, 124c, 125bc, 144b, 145bb, 144c, 145bc) pour connecter la troisième section allongée (125, 145) à la seconde section allongée (124, 144) et pour guider un mouvement télescopique entre la troisième section allongée et la deuxième section allongée.
